# EUROPEAN PATENT APPLICATION

(11) **EP 4 706 889 A1**
(43) Date of publication of application: **11.03.2026**
(21) Application number: 24198929.2
(22) Date of filing: 06.09.2024
(51) Int. Cl.: B25B 11/02, F16H 57/023, B25B 27/14, B25B 27/00

(54) **A TOOL KIT AND A METHOD FOR ASSEMBLING A TRANSMISSION**

(71) Applicant: Volvo Truck Corporation, 405 08 Göteborg (SE)
(72) Inventor: BROLLES, Vincent, 69720 ST LAURENT DE MURE (FR); BARILLOT, Thomas, 69440 MORNANT (FR); CAUVIN, Bertrand, 01600 REYRIEUX (FR)
(74) Representative: Kransell & Wennborg KB

(57) **Abstract**

A tool kit for assembling a transmission shaft arrangement with a transmission housing, comprising:
- a guiding part (110) defining a guiding path (120) extending along an exterior (111) of the guiding part from a start position (121) to an end position (122), the guiding part being configured to be positioned with the end position within the transmission housing,
- an engagement member configured to be fixed to a component of the transmission shaft arrangement, wherein the engagement member is configured to slidingly engage with the guiding part and slide along the guiding path from the start position to the end position.

The guiding path is arranged to guide the transmission shaft arrangement such that it is translated and rotated with respect to the guiding part as the engagement member is slid along the guiding path from the start position to the end position.

## Description

### TECHNICAL FIELD

The disclosure relates generally to mounting of transmission components within a transmission housing. In particular aspects, the disclosure relates to a tool kit and a method for assembling a transmission shaft arrangement with a transmission housing. The disclosure can be applied to heavy-duty vehicles, such as trucks, buses, and construction equipment, among other vehicle types, such as passenger cars. Although the disclosure may be described with respect to a particular vehicle, the disclosure is not restricted to any particular vehicle.

### BACKGROUND

In recent years, there has been a trend in the transport industry towards developing powertrains with at least one electric prime mover, i.e., with at least one electric motor for propulsion of the vehicle. The electric motor requires electric power, which is usually provided by an electric energy storage system, such as one or more batteries. The batteries are space consuming, and it is therefore desirable to provide a compact powertrain, including a compact transmission in which a transmission shaft arrangement is provided within a transmission housing. This may entail difficulties during assembly of the transmission, since the compact transmission configuration may require the operator to perform a complicated and time-consuming series of movements to fit the transmission shaft arrangement within the transmission housing.

### SUMMARY

According to a first aspect of the disclosure, a tool kit for assembling a transmission shaft arrangement with a transmission housing is provided. The tool kit comprises:
- a guiding part defining a guiding path extending along an exterior of the guiding part from a start position to an end position, the guiding part being configured to be positioned with the end position located within the transmission housing,
- an engagement member configured to be fixed to a component of the transmission shaft arrangement, wherein the engagement member is configured to slidingly engage with the guiding part and slide along the guiding path from the start position to the end position,
wherein the guiding path is arranged to guide the transmission shaft arrangement such that it is translated and rotated with respect to the guiding part as the engagement member, fixed to the component of the transmission shaft arrangement, is slid along the guiding path from the start position to the end position.

The first aspect of the disclosure may seek to provide a tool kit that may facilitate mounting of a transmission shaft arrangement in a transmission housing in which a straight movement is not sufficient for reaching a desired position within the transmission housing. It may further seek to reduce the risk of damage to transmission components during assembly as well as during disassembly of the transmission, such as in connection with repair. A technical benefit may include that a more time-efficient assembly and disassembly of the transmission shaft arrangement and the transmission housing may be achieved, with a reduced risk that damage occurs to the transmission components during the assembly process. The tool kit may ensure a sufficient clearing between the transmission shaft arrangement and the transmission housing, including components already mounted therein. Gearwheels and other components of the transmission shaft arrangement may hence be better protected than when assembly/disassembly is performed without the tool kit. The tool kit may hence contribute to a faster, safer, and easier assembly and disassembly of the transmission.

Optionally in some examples, including in at least one preferred example, the guiding part comprises a positioning means for positioning the guiding part in a desired target position with respect to the transmission housing. A technical benefit may include facilitated positioning of the guiding part in connection with the assembly.

Optionally in some examples, including in at least one preferred example, the guiding path and the engagement member are configured to disable separation of the guiding part and the engagement member during movement of the engagement member along the guiding path. This may be achieved by shaping the guiding path and the engagement member such that cross-sectional profiles thereof interlock, disabling all relative movement apart from movement along the guiding path. A technical benefit may include that an operator, assembling the components, may easily follow the guiding path without running the risk of inadvertently separating the transmission shaft arrangement from the guiding part prior to reaching the desired position within the transmission housing.

Optionally in some examples, including in at least one preferred example, the start and end positions of the guiding path are configured to enable disengagement of the engagement member from the guiding part. Hence, it can be ensured that the transmission shaft arrangement can be separated from the guiding part at the start and end positions.

Optionally in some examples, including in at least one preferred example, the guiding path comprises a groove formed within the guiding part. In other examples, the guiding path may comprise a ridge protruding from the guiding part. In both ways, a robust guiding path may be achieved.

Optionally in some examples, including in at least one preferred example, the groove opens at the start position and at the end position, the engagement member being configured to enter and exit the groove via the start and end positions, respectively. A technical benefit may include facilitated engagement and disengagement of the engagement member and the guiding part at desired positions.

Optionally in some examples, including in at least one preferred example, the groove comprises a chamfer at the start position, and/or at the end position. Instead of a chamfer, a fillet or radius may be provided. A technical benefit may include that reduced precision is required for guiding the engagement member into the groove at the start and/or end position.

Optionally in some examples, including in at least one preferred example, the engagement member comprises a head configured to fit within the groove. A technical benefit may include that disengagement of the engagement member from the guiding part along the groove may be efficiently prevented. When the guiding path is a ridge, the engagement member may comprise a hollow portion configured to fit over the ridge such that the engagement member is able to slide along the ridge.

Optionally in some examples, including in at least one preferred example, the engagement member comprises a ball stud. Using a ball stud, disengagement of the engagement member from the groove formed in the guiding part may be prevented.

Optionally in some examples, including in at least one preferred example, the groove is delimited by a groove surface configured to prevent disengagement of the engagement member from the groove between the start and end positions. Correspondingly, when the guiding path comprises a ridge, the ridge may be delimited by a ridge surface configured to prevent disengagement of the engagement member from the ridge between the start and end positions. A technical benefit may include a reduced risk of separation of the guiding part and the transmission shaft arrangement between the start and end positions.

Optionally in some examples, including in at least one preferred example, the guiding path comprises a combination of straight and curved portions. A technical benefit may include facilitated guiding into narrow spaces.

Optionally in some examples, including in at least one preferred example, the guiding path comprises first and second straight portions extending in a longitudinal direction of the guiding part, and at least one curved portion connecting the first and second straight portions. The first straight portion may extend from the start position of the guiding path, and the second straight portion may extend to the end position of the guiding path.

Optionally in some examples, including in at least one preferred example, the guiding part comprises a cylinder wall, wherein the first straight portion extends along the cylinder wall from the start position of the guiding path, such as from a first end of the guiding part.

Optionally in some examples, including in at least one preferred example, the guiding part further comprises a first leg protruding from the cylinder wall, such as close to a second end of the guiding part, wherein the at least one curved portion and the second straight portion of the guiding path extend along the first leg. In this way, rotation of the transmission shaft arrangement with respect to the transmission housing is enabled, as well as translation in a direction different from the longitudinal direction.

Optionally in some examples, including in at least one preferred example, the second straight portion extends at a larger radial distance from a longitudinal axis of the cylinder wall than the first straight portion. A technical benefit may include the ability to guide the transmission shaft arrangement into a space that is at least partly hidden and that cannot be reached via straight movement.

Optionally in some examples, including in at least one preferred example, the guiding part further comprises a second leg protruding from the cylinder wall, wherein the second leg comprises a positioning means for positioning the guiding part in a desired target position with respect to the transmission housing. The first and second legs may extend at different angular positions from the cylinder wall, and/or in different directions from the cylinder wall. A technical benefit may include the guiding part may be stably positioned against the housing during the assembly.

Optionally in some examples, including in at least one preferred example, the positioning means comprises a rib configured to fit in a receiving space of the transmission housing. A technical benefit may include a reduced risk of relative movement of the guiding part and the transmission housing during the assembly.

Optionally in some examples, including in at least one preferred example, the engagement member is integrated with the component of the transmission shaft arrangement. In other examples, the engagement member may be a separate member which is fixed to the component prior to the assembly.

Optionally in some examples, including in at least one preferred example, the component of the transmission shaft arrangement is a bearing plate.

According to a second aspect of the disclosure, a method of assembling a transmission shaft arrangement with a transmission housing using a tool kit of the first aspect is provided. The method comprises:
- positioning the guiding part with the end position of the guiding path provided at a target position within the transmission housing,
- engaging the engagement member, fixed to the component of the transmission shaft arrangement, with the guiding part at the start position of the guiding path,
- sliding the transmission shaft arrangement along the guiding path from the start position to the end position, and
- removing the guiding part from the transmission housing.

The second aspect of the disclosure may seek to provide a method that facilitates correct mounting of a transmission shaft arrangement in a transmission housing. A technical benefit may include that an easier and a more time-efficient assembly may be achieved, with a reduced risk that damage occurs to the transmission components.

Optionally in some examples, including in at least one preferred example, the method further comprises maintaining the guiding part in a fixed position with respect to the transmission housing during the sliding of the transmission shaft arrangement along the guiding path. This may reduce the risk of damage to the transmission components during the assembly.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1a** is a perspective view of an exemplary first part of a tool kit according to an example.
**FIG. 1b** is a perspective view of an exemplary second part of a tool kit according to an example.
**FIG. 2** is a perspective view of a transmission housing and a part of a tool kit according to an example.
**FIG. 3** is a perspective view of a component of a transmission shaft arrangement and a part of a tool kit according to an example.
**FIG. 4** is another perspective view of the second part of the tool kit illustrated in FIG. 1b.
**FIG. 5** is a perspective view of an exemplary first part of a tool kit according to another example.
**FIG. 6** is another perspective view of the transmission housing and the part of the tool kit illustrated in FIG. 2.
**FIGS. 7a-7b** are perspective views of a transmission shaft arrangement, a transmission housing, and a tool kit according to an example.
**FIGS. 8a-8b** are top views of a transmission shaft arrangement, a transmission housing, and a tool kit according to an example.
**FIG. 9** is a flow chart illustrating a method according to embodiments.

The drawings are schematic and are not necessarily drawn to scale.

### DETAILED DESCRIPTION

The detailed description set forth below provides information and examples of the disclosed technology with sufficient detail to enable those skilled in the art to practice the disclosure.

In electric vehicles, it is often desirable to provide a transmission which is as compact as possible to provide sufficient space for batteries and other components of the vehicle. For example, in certain electric axle (E-axle) designs, the space available for the transmission may be limited due to suspension air bellows fitted between the axle and a frame of the vehicle. To avoid situations where the air bellows come into contact with a transmission housing during operation of the vehicle, the transmission housing may have to be shaped to allow clearance therebetween. This may however entail difficulties when assembling the transmission, such as when mounting a transmission shaft arrangement within the transmission housing. The design of the transmission housing may disable a "vertical drop" of the transmission shaft arrangement into the transmission housing, i.e., a movement along a straight line without relative rotation of the components. Instead, the compact design of the transmission housing may require the operator to perform a complicated and time-consuming series of movements to fit the transmission shaft arrangement within the transmission housing.

The present disclosure provides a tool kit for facilitating assembly of a transmission associated with the above-mentioned difficulties.

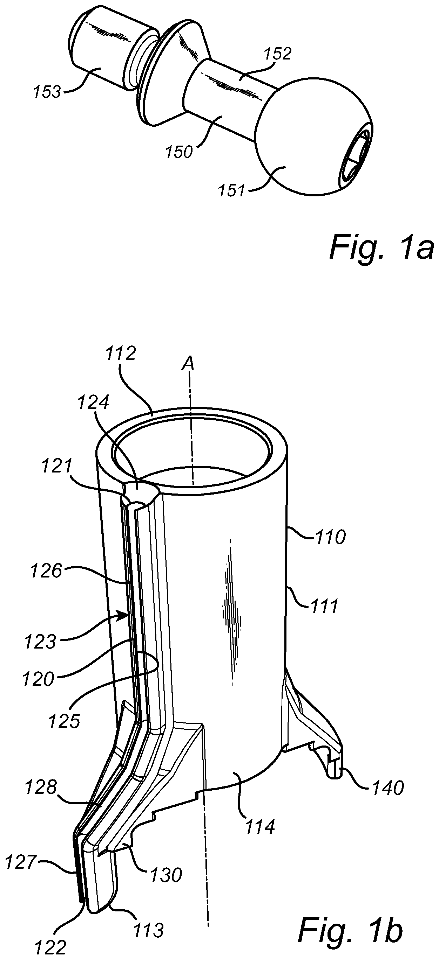

**FIGS. 1a****-b** show an exemplary tool kit according to an example. The tool kit is intended for assembling a transmission shaft arrangement with a transmission housing and comprises an engagement member 150, illustrated in FIG. 1a, and a guiding part 110, illustrated in FIG. 1b.

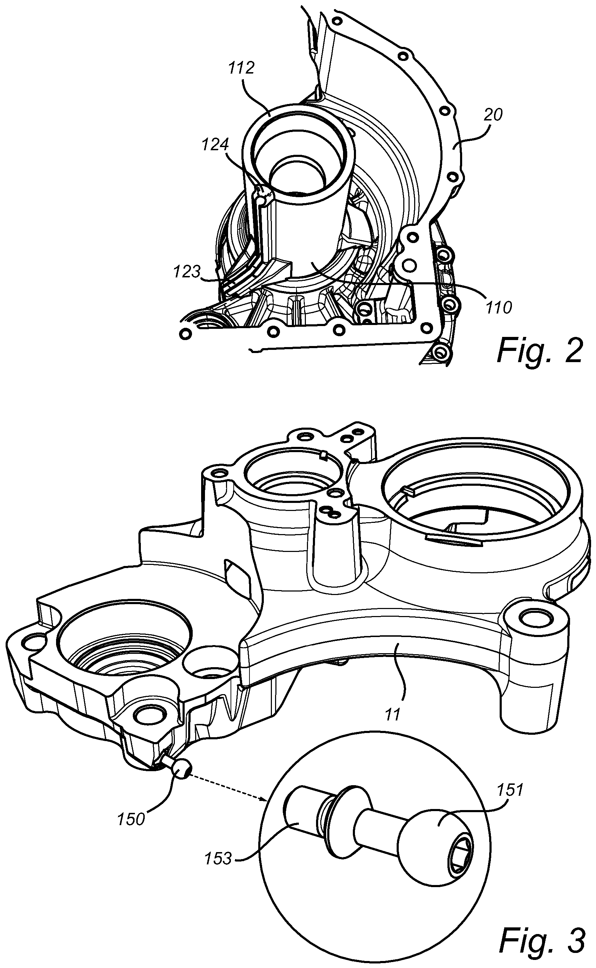

The guiding part 110 defines a guiding path 120 extending along an exterior 111 of the guiding part 110, from a start position 121 to an end position 122. The guiding part 110 is configured to be positioned with the end position 122 located within a transmission housing 20, as illustrated in **FIG. 2****.** The start position 121 may be located outside of the transmission housing 20, such that it may be easily accessed in connection with assembly.

As further illustrated in **FIG. 3****,** the engagement member 150 is configured to be fixed to a component 11 of the transmission shaft arrangement. In the illustrated example, the engagement member 150 is configured to be fixed to a bearing plate 11. The engagement member 150 is further configured to slidingly engage with the guiding part 110 and slide along the guiding path 120 from the start position 121 to the end position 122. The guiding path 120 is arranged to guide the transmission shaft arrangement such that it is translated and rotated with respect to the guiding part 110 as the engagement member 150, fixed to the component 11, is slid along the guiding path 120 from the start position 121 to the end position 122. For this purpose, the guiding path 120 may comprise a combination of straight and curved portions.

In the illustrated example, the guiding part 110 extends along a longitudinal axis A between a first end 112 and a second end 113. The start position 121 is provided close to the first end 112 of the guiding part 110 and the end position 122 is provided close to the second end 113. To make use of gravity during the assembly, the guiding part 110 may preferably be positioned with the longitudinal axis A extending vertically, with the second end 113 positioned in the transmission housing 20, below the first end 112. The end position 122 of the guiding path 120 is distanced from the start position 121 in the longitudinal direction as well as in a transverse direction of the guiding part 110.

The guiding path 120 may, as in the illustrated example, comprise a groove 123 formed within the guiding path 120, and the engagement member 150 may comprise a head 151 configured to fit within the groove 123. In other, non-illustrated examples, the guiding path may comprise a ridge or similar, and the engagement member may comprise a recess configured to receive a portion of the ridge such that it may slide along it without disengaging therefrom.

The guiding path 120 and the engagement member 150 are configured to disable separation of the guiding part 110 and the engagement member 150 during movement of the engagement member 150 along the guiding path 120. In the illustrated example, this is achieved by the engagement member 150 being in the form of a ball stud comprising a ball-shaped head 151 and a shaft 152 extending from the head 151. The groove 123 is delimited by a groove surface 125 configured to prevent disengagement of the engagement member 150 from the groove 123 between the start and end positions 121, 122. When seen in a cross-sectional view, the groove surface 125 extends around more than 50% of the ball-shaped head 151, hence preventing it from disengaging from the groove 123.

The groove 123 opens at the start position 121 such that the head 151 may engage with the groove 123, and such that it may be disengaged from the groove 123. A chamfer 124 is provided at the start position 121, gradually widening the groove 123 toward the first end 112 of the guiding part 110 and facilitating engagement of the head 151 and the guiding path 120. Instead of a chamfer, other means may be provided to facilitate engagement, such as any kind of gradual widening that may funnel the head 151 into the groove 123 during assembly.

The groove 123 also opens at the end position 122 such that the head 151 may exit the groove 123. Furthermore, during disassembly of the transmission, the head 151 may enter the groove 123 via the end position 122 such that the transmission shaft arrangement may be guided toward the start position 121. A chamfer or similar may be provided also at the end position 122, similar to the start position 121.

The start position 121 may be provided close to the first end 112 of the guiding part 110, such that the engagement member 150 may engage with the guiding path 120 at or close to the first end 112. In some examples, it may be positioned at the first end 112 of the guiding part 110. In other examples, it may be positioned between the first end 112 and the second end 113, somewhere along the exterior 111 of the guiding part 110. The end position 122 may be positioned at the second end 113, or close to the second end 113, depending on the configuration of the transmission housing 20 in which it is to be used.

In the illustrated example, the guiding path 120 comprises first and second straight portions 126, 127 extending in a longitudinal direction of the guiding part 110, i.e., in parallel with the longitudinal axis A. It further comprises a curved portion 128 connecting the first and second straight portions 126, 127. The curved portion 128 may as illustrated herein comprise several sections with different radii of curvature. In other non-illustrated examples, the curved portion 128 may be designed in another way, such as a circular or parabolic curve, and/or including one or more straight sections. It is generally beneficial to avoid any sharp corners, to facilitate sliding of the engagement member 150 along the guiding path 120. The design of the guiding path 120 may be adapted to the conditions of the transmission with which the tool kit is to be used.

The guiding part 110 may have any shape that allows it to be positioned in the transmission housing 20 and that enables creation of a guiding path 120 that can guide the transmission shaft assembly smoothly into its intended position within the transmission housing 20 without coming into contact with any components already mounted within the housing 20, or with the housing 20 itself. In the illustrated example, the guiding part 110 has the general shape of a cylinder with two legs 130, 140 extending at one end thereof. Hence, the guiding part 110 comprises a cylinder wall 114 with a circular cross-section, centered on the longitudinal axis A. Close to the second end 113, the two legs 130, 140 extend outward from the cylinder wall 114 and toward the second end 113 of the guiding part 110.

The guiding path 120 extend partially along the first leg 130, which in the illustrated example extends in a non-radial direction from the cylinder wall 114. The first straight portion 126 of the guiding path 120 extends along the cylinder wall 114 from the start position 121 of the guiding path 120 to the curved portion 128. The curved portion 128 and the second straight portion 127 of the guiding path 120 extend along the first leg 130. Hence, the second straight portion 127 extends at a larger radial distance from the longitudinal axis A of the cylinder wall 114 than the first straight portion 126. Furthermore, if a plane is defined that includes the longitudinal axis A and that cuts the first straight portion 126 in two halves, the second straight portion 127 is located outside of the plane.

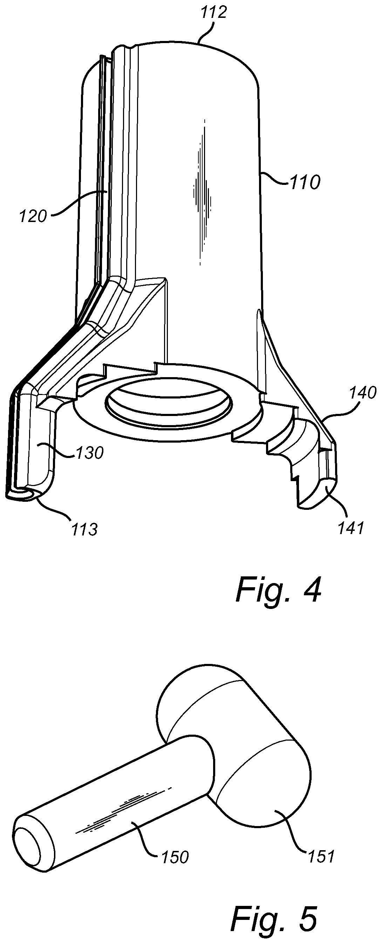

At a second leg 140, the guiding part 110 comprises a positioning means 141 for positioning the guiding part 110 in a desired target position with respect to the transmission housing 20. This is also illustrated in **FIG. 4****,** showing the guiding part 110 illustrated in FIG. 1b in another view. The positioning means 141 is herein in the form of an arc-shaped rib configured to fit within a receiving space of the transmission housing 20. However, in other examples, the positioning means may have a different shape.

The first and second legs 130, 140 may preferably extend in different directions from the cylinder wall 114 and be configured such that the guiding part 110 can be stably positioned in the target position.

The guiding part 110 may be hollow to save weight, as in the illustrated example. In other examples, it may be solid. The guiding part 110 may, by way of example, be manufactured by molding, casting, additive manufacturing, and/or machining. It may, for example, be made of aluminium, plastic, or steel.

The engagement member 150 may be manufactured as a completely separate component which is fixed to the component 11 of the transmission shaft arrangement in connection with the assembly, or at least before the assembly takes place. Alternatively, it may be integrated with the component 11 of the transmission shaft arrangement, i.e., formed in one piece with the component 11. In the illustrated example shown in FIG. 1a and FIG. 3, the engagement member 150 comprises a portion 153, opposite to the head 151, configured to be fixed to the component 11 of the transmission shaft arrangement.

**FIG. 5** illustrates the engagement member 150 according to another example, in which the head 151 has a spherocylindrical, or capsule, shape. As can be understood, any shape of the head that will allow the engagement member 150 to slide in the groove 123, and preferably prevent it from disengaging therefrom between the start and end positions 121, 122, may be considered.

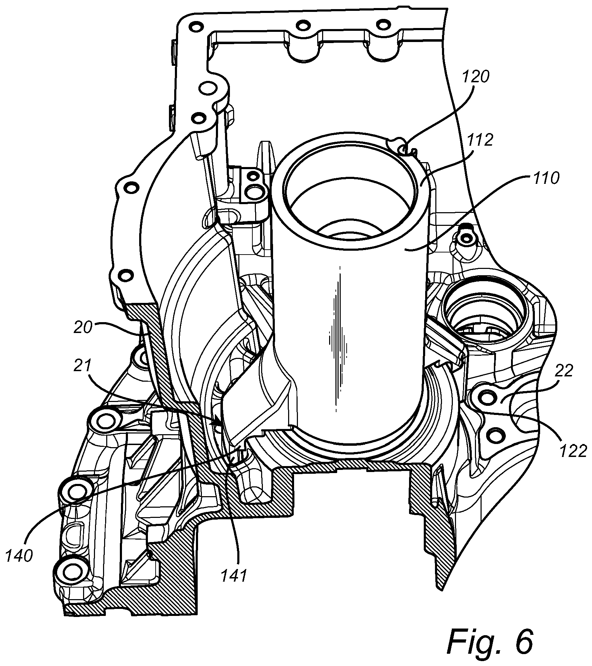

**FIG. 6** illustrates the guiding part 110 with its positioning means 141 positioned within a receiving space 21 of the transmission housing 20. The positioning means 141 may be tailored to fit within the receiving space 21 of the transmission housing 20, such that rotation of the guiding part 110 relative to the transmission housing 20 is prevented during assembly. FIG. 6 further shows a location 22 at which the bearing plate 11 is intended to be positioned after mounting of the transmission shaft assembly. The guiding part 110 is positioned such that the guiding path 120 has its end position 122 located in close vicinity to the location 22.

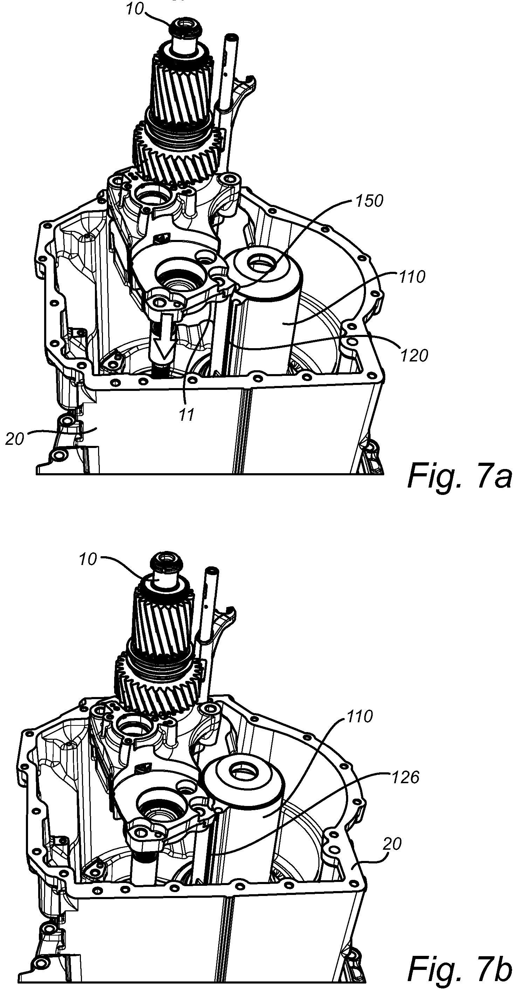

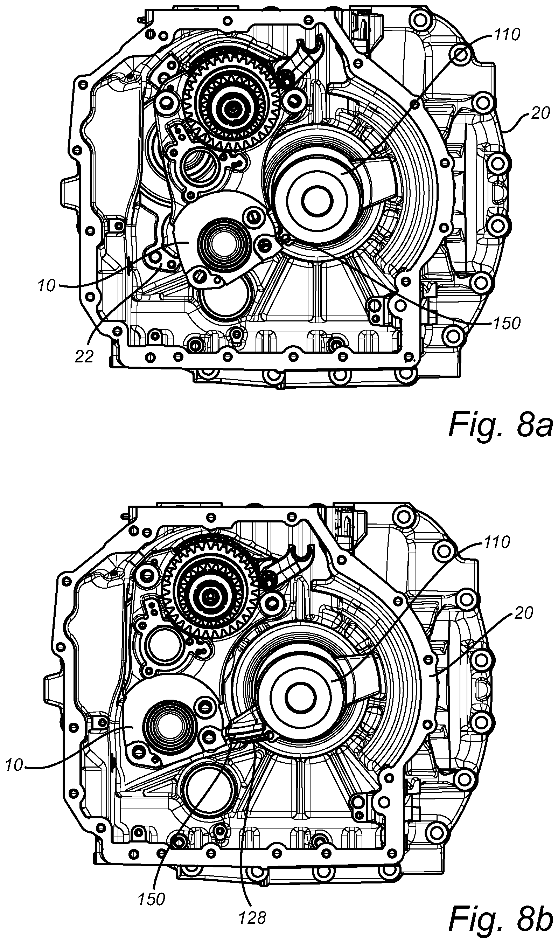

**FIGS. 7a-7b** and **FIGS. 8a-8b** illustrate assembly of a transmission shaft arrangement 10 with a transmission housing 20 using a tool kit as disclosed herein. In FIG. 7a, the guiding part 110 has been placed in the transmission housing 20. The transmission shaft arrangement 10, including the component 11 in the form of a bearing plate and the engagement member 150 fixed thereto, is lowered toward the transmission housing 20 with the engagement member 150 aligned with the guiding path 120. In FIG. 7b, the engagement member 150 has entered into engagement with the guiding path 120 and is sliding downward along the first straight portion 126, with the transmission shaft arrangement 10 describing a straight vertical movement parallel with the longitudinal axis A. FIG. 8a shows a top view of the transmission shaft arrangement 10, the transmission housing 20 and the tool kit during movement along the first straight portion 126 toward the intended location 22 of the transmission housing 20. In FIG. 8b, the transmission shaft arrangement 10 has reached the intended location 22. As can be seen from comparing FIGS. 8a and 8b, the transmission shaft arrangement 10 has been rotated with respect to the transmission housing 20 and the guiding part 110 during guiding along the curved portion 128 of the guiding path 120.

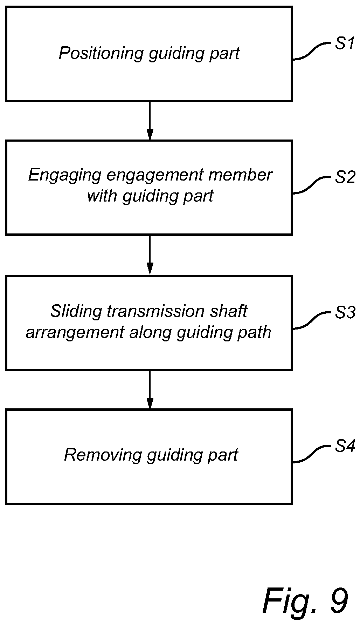

**FIG. 9** illustrates a method of assembling a transmission shaft arrangement 10 with a transmission housing 20 using a tool kit as disclosed herein. The method comprises the following actions:
S 1: Positioning the guiding part 110 with the end position 122 of the guiding path 120 provided at a target position within the transmission housing 20. In the illustrated example, the guiding part 110 is positioned with its second end 113 within the transmission housing 20, with the positioning means 140 positioned within a receiving space 21 of the transmission housing 20.
S2: Engaging the engagement member 150, fixed to the component 11 of the transmission shaft arrangement 10, with the guiding part 110 at the start position 121 of the guiding path 120.
S3: Sliding the transmission shaft arrangement 10 along the guiding path 120 from the start position 121 to the end position 122. When the end position 122 is reached, the engagement member 150 disengages from the guiding part 110 and ends up at the target position within the transmission housing 20, with the component 11 and other parts of the transmission shaft arrangement 10 consequently located and oriented as desired within the transmission housing 20.
S4: Removing the guiding part 110 from the transmission housing 20. The engagement member 150 may advantageously remain fixed to the component 11 also after assembly, to facilitate later removal of the transmission shaft assembly 10 from the transmission housing 20.

The guiding part 110 should preferably be maintained in a fixed position with respect to the transmission housing 20 during the sliding of the transmission shaft arrangement 10 along the guiding path 120, to avoid damages to the components.

The tool kit may also be used for disassembling the transmission, such as in connection with repair. In this case, the action S1 is the same as described above. The engagement member 150, fixed to the component 11, is thereafter engaged with the guiding part 110 at the end position 122 of the guiding path 120, and the transmission shaft arrangement 10 is slid along the guiding path 120 from the end position 122 to the start position 121, at which it is disengaged from the guiding part 110.

The operational actions described in any of the exemplary aspects herein are described to provide examples and discussion. Although a specific order of method actions may be shown or described, the order of the actions may differ. In addition, two or more actions may be performed concurrently or with partial concurrence.

In the following, a list of numbered examples of the disclosure is presented.

Example 1. A tool kit for assembling a transmission shaft arrangement (10) with a transmission housing (20), the tool kit comprising:
- a guiding part (110) defining a guiding path (120) extending along an exterior (111) of the guiding part (110) from a start position (121) to an end position (122), the guiding part (110) being configured to be positioned with the end position (122) located within the transmission housing (20),
- an engagement member (150) configured to be fixed to a component (11) of the transmission shaft arrangement (10), wherein the engagement member (150) is configured to slidingly engage with the guiding part (110) and slide along the guiding path (120) from the start position (121) to the end position (122),
wherein the guiding path (120) is arranged to guide the transmission shaft arrangement (10) such that it is translated and rotated with respect to the guiding part (110) as the engagement member (150) is slid along the guiding path (120) from the start position (121) to the end position (122).

Example 2. The tool kit of example 1, wherein the guiding part (110) comprises a positioning means (141) for positioning the guiding part (110) in a desired target position with respect to the transmission housing (20).

Example 3. The tool kit of example 1 and 2, wherein the guiding path (120) and the engagement member (150) are configured to disable separation of the guiding part (110) and the engagement member (150) during movement of the engagement member (150) along the guiding path (120).

Example 4. The tool kit of any one of the preceding examples, wherein the start and end positions (121, 122) of the guiding path (120) are configured to enable disengagement of the engagement member (150) from the guiding part (110).

Example 5. The tool kit of any one of the preceding examples, wherein the guiding path (120) comprises a groove (123) formed within the guiding part (110).

Example 6. The tool kit of example 5, wherein the groove (123) opens at the start position (121) and at the end position (122), the engagement member (150) being configured to enter and exit the groove (123) via the start and end positions (121, 122), respectively.

Example 7. The tool kit of example 6, wherein the groove comprises a chamfer (124) at the start position (121).

Example 8. The tool kit of any one of examples 5-7, wherein the engagement member (150) comprises a head (151) configured to fit within the groove (123).

Example 9. The tool kit of any one of examples 5-8, wherein the engagement member (150) comprises a ball stud.

Example 10. The tool kit of any one of examples 5-9, wherein the groove is delimited by a groove surface (125) configured to prevent disengagement of the engagement member (150) from the groove (123) between the start and end positions (121, 122).

Example 11. The tool kit of any one of the preceding examples, wherein the guiding path (120) comprises a combination of straight and curved portions.

Example 12. The tool kit of any one of the preceding examples, wherein the guiding path comprises first and second straight portions (126, 127) extending in a longitudinal direction of the guiding part (120), and at least one curved portion (128) connecting the first and second straight portions (126, 127).

Example 13. The tool kit of example 12, wherein the guiding part (110) comprises a cylinder wall (114), and wherein the first straight portion (126) extends along the cylinder wall (114) from the start position (121) of the guiding path (120), such as from a first end (112) of the guiding part (110).

Example 14. The tool kit of example 13, wherein the guiding part (110) further comprises a first leg (130) protruding from the cylinder wall (114), preferably close to a second end (113) of the guiding part (110), and wherein the at least one curved portion (128) and the second straight portion (127) of the guiding path (120) extend along the first leg (130).

Example 15. The tool kit of example 14, wherein the second straight portion (127) extends at a larger radial distance from a longitudinal axis (A) of the cylinder wall (114) than the first straight portion (126).

Example 16. The tool kit of example 14 or 15, wherein the guiding part (110) further comprises a second leg (140) protruding from the cylinder wall (114), and wherein the second leg (140) comprises a positioning means (141) for positioning the guiding part (110) in a desired target position with respect to the transmission housing (20).

Example 17. The tool kit of example 16, wherein the positioning means comprises a rib (141) configured to fit in a receiving space (21) of the transmission housing (20).

Example 18. The tool kit of any one of the preceding examples, wherein the engagement member (150) is integrated with the component (11) of the transmission shaft arrangement (10), and/or wherein the component (11) of the transmission shaft arrangement (10) is a bearing plate.

Example 19. A method of assembling a transmission shaft arrangement (10) with a transmission housing (20) using a tool kit of any one of the preceding examples, the method comprising:
- positioning (S1) the guiding part (110) with the end position (122) of the guiding path (120) provided at a target position within the transmission housing (20),
- engaging (S2) the engagement member (150), fixed to the component (11) of the transmission shaft arrangement (10), with the guiding part (110) at the start position (121) of the guiding path (120),
- sliding (S3) the transmission shaft arrangement (10) along the guiding path (120) from the start position (121) to the end position (122), and
- removing (S4) the guiding part (110) from the transmission housing (20).

Example 20. The method of example 19, further comprising:
- maintaining the guiding part (110) in a fixed position with respect to the transmission housing (20) during the sliding of the transmission shaft arrangement (10) along the guiding path (120).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A tool kit for assembling a transmission shaft arrangement (10) with a transmission housing (20), the tool kit comprising:
- a guiding part (110) defining a guiding path (120) extending along an exterior (111) of the guiding part (110) from a start position (121) to an end position (122), the guiding part (110) being configured to be positioned with the end position (122) located within the transmission housing (20),
- an engagement member (150) configured to be fixed to a component (11) of the transmission shaft arrangement (10), wherein the engagement member (150) is configured to slidingly engage with the guiding part (110) and slide along the guiding path (120) from the start position (121) to the end position (122),
wherein the guiding path (120) is arranged to guide the transmission shaft arrangement (10) such that it is translated and rotated with respect to the guiding part (110) as the engagement member (150) is slid along the guiding path (120) from the start position (121) to the end position (122).

2. The tool kit of claim 1, wherein the guiding part (110) comprises a positioning means (141) for positioning the guiding part (110) in a desired target position with respect to the transmission housing (20).

3. The tool kit of claim 1 and 2, wherein the guiding path (120) and the engagement member (150) are configured to disable separation of the guiding part (110) and the engagement member (150) during movement of the engagement member (150) along the guiding path (120).

4. The tool kit of any one of the preceding claims, wherein the start and end positions (121, 122) of the guiding path (120) are configured to enable disengagement of the engagement member (150) from the guiding part (110).

5. The tool kit of any one of the preceding claims, wherein the guiding path (120) comprises a groove (123) formed within the guiding part (110).

6. The tool kit of claim 5, wherein the groove (123) opens at the start position (121) and at the end position (122), the engagement member (150) being configured to enter and exit the groove (123) via the start and end positions (121, 122), respectively.

7. The tool kit of any one of claims 5-6, wherein the engagement member (150) comprises a head (151) configured to fit within the groove (123).

8. The tool kit of any one of claims 5-7, wherein the groove (123) is delimited by a groove surface (125) configured to prevent disengagement of the engagement member (150) from the groove (123) between the start and end positions (121, 122).

9. The tool kit of any one of the preceding claims, wherein the guiding path (120) comprises a combination of straight and curved portions.

10. The tool kit of any one of the preceding claims, wherein the guiding path comprises first and second straight portions (126, 127) extending in a longitudinal direction of the guiding part (120), and at least one curved portion (128) connecting the first and second straight portions (126, 127).

11. The tool kit of claim 10, wherein the guiding part (110) comprises a cylinder wall (114), and wherein the first straight portion (126) extends along the cylinder wall (114) from the start position (121) of the guiding path (120), such as from a first end (112) of the guiding part (110).

12. The tool kit of claim 11, wherein the guiding part (110) further comprises a first leg (130) protruding from the cylinder wall (114), preferably close to a second end (113) of the guiding part (110), and wherein the at least one curved portion (128) and the second straight portion (127) of the guiding path (120) extend along the first leg (130).

13. The tool kit of claim 12, wherein the second straight portion (127) extends at a larger radial distance from a longitudinal axis (A) of the cylinder wall (114) than the first straight portion (126).

14. The tool kit of claim 12 or 13, wherein the guiding part (110) further comprises a second leg (140) protruding from the cylinder wall (114), and wherein the second leg (140) comprises a positioning means (141) for positioning the guiding part (110) in a desired target position with respect to the transmission housing (20).

15. A method of assembling a transmission shaft arrangement (10) with a transmission housing (20) using a tool kit of any one of the preceding claims, the method comprising:
- positioning (S1) the guiding part (110) with the end position (122) of the guiding path (120) provided at a target position within the transmission housing (20),
- engaging (S2) the engagement member (150), fixed to the component (11) of the transmission shaft arrangement (10), with the guiding part (110) at the start position (121) of the guiding path (120),
- sliding (S3) the transmission shaft arrangement (10) along the guiding path (120) from the start position (121) to the end position (122), and
- removing (S4) the guiding part (110) from the transmission housing (20).
